# EUROPEAN PATENT APPLICATION

(11) **EP 4 760 055 A1**
(43) Date of publication of application: **17.06.2026**
(21) Application number: 25222185.8
(22) Date of filing: 10.12.2025
(51) Int. Cl.: F01D 5/14, F04D 29/32, F04D 29/38

(54) **SWEPT COMPRESSOR BLADE, COMPRESSOR, AND GAS TURBINE INCLUDING SAME**

(30) Priority: 12.12.2024 KR 20240184500
(71) Applicant: Doosan Enerbility Co., Ltd., Seongsan-gu Changwon-si, Gyeongsangnam-do 51711 (KR)
(72) Inventor: JUNG, Young Jin, 13607 Seongnam-si (KR); LEE, Sung Ryong, 42101 Daegu (KR); CHUNG, Jae Hoon, 51415 Changwon-si (KR); CHOI, Jae Woo, 51711 Changwon-si (KR)
(74) Representative: Ter Meer Steinmeister & Partner

(57) **Abstract**

A compressor blade having a forward and rearward swept profile and a gas turbine including the compressor blade are provided. The compressor blade includes an airfoil including stacked sections having a predetermined thickness formed in a form of a closed curve, which connects a concave curve and a convex curve, extending in a radial span between a hub and a shroud, extending in a direction of a chord line between a leading edge and a trailing edge, and extending in a thickness direction between a pressure surface and a suction surface, wherein the airfoil is formed with sections having a predetermined thickness stacked to be inclined in a radial direction, and includes a swept profile formed such that the leading edge and the trailing edge are inclined forward or rearward of the chord line, and the swept profile includes a first area swept rearwards from the hub, a second area swept forwards from a position opposite to the first area to the shroud, and a third area that is not swept and is located between the first area and the second area.

## Description

### BACKGROUND

### Technical Field

Apparatuses and methods consistent with exemplary embodiments relate to a swept compressor blade, a compressor, and a gas turbine including the same, and more particularly, to a compressor blade, which has a forward and rearward swept profile, a compressor, and a gas turbine including the same.

### Description of the Related Art

A turbine is a mechanical device that utilizes a flow of a compressible fluid, such as steam or gas, to generate a rotational force through an impulse force or reaction force. The turbine includes a steam turbine using a steam and a gas turbine using a high temperature combustion gas.

The gas turbine includes a compressor, a combustor, and a turbine. The compressor includes an air inlet to introduce air, and a plurality of compressor vanes and compressor blades which are alternately arranged in a compressor housing.

The combustor supplies fuel to the air compressed in the compressor and burns a mixture of fuel-air with a burner to generate high temperature and high pressure combustion gas.

The turbine includes a plurality of turbine vanes and turbine blades disposed alternately in a turbine casing. Further, a rotor is arranged to penetrate central portions of the compressor, the combustor, the turbine, and an exhaust chamber.

The rotor is rotatably supported at both ends thereof by bearings. Further, a plurality of disks are fixed to the rotor to connect each blade. A drive shaft of a generator is connected to an end of the exhaust chamber.

The gas turbine has no reciprocating mechanism such as a piston which is usually provided in four-stroke engine. That is, the gas turbine has no mutual frictional part, such as a piston- cylinder, thereby consuming extremely low lubricant, significantly reducing an amplitude of vibration, unlike the reciprocating machine. Therefore, highspeed operation of the gas turbine is possible.

Briefly describing the operation of the gas turbine, air compressed in the compressor, the air-fuel mixture is burned to produce high temperature combustion gas, which is then injected toward the turbine. The injected combustion gas passes through the turbine vanes and turbine blades to generate a rotational force, thereby rotating the rotor.

In a related art, a fan blade has a rearward sweep between 0 and 50% of a span, a transition area between 50% and 60% of the span, a forward sweep between 60% and 100% of the span, and a rearward sweep angle between 5° and 10°.

However, the related art defines the shape of a fan blade in a propulsion of a gas turbine engine. Therefore, the shape cannot be directly applied to the compressor blades, and even if applied, excellent aerodynamic performance cannot be achieved.

### SUMMARY

Aspects of one or more exemplary embodiments provide a swept compressor blade and a gas turbine including the same, the swept compressor blade being capable of achieving excellent aerodynamic performance by defining a sweep angle according to a span area of a compressor blade.

Additional aspects will be set forth in part in the description which follows and, in part, will become apparent from the description, or may be learned by practice of the exemplary embodiments.

According to an aspect of an exemplary embodiment, there is provided a compressor blade including: an airfoil including stacked sections having a predetermined thickness formed in a form of a closed curve, which connects a concave curve and a convex curve, extending in a radial span between a hub and a shroud, extending in a direction of a chord line between a leading edge and a trailing edge, and extending in a thickness direction between a pressure surface and a suction surface, wherein the airfoil may be formed with sections having a predetermined thickness stacked to be inclined in a radial direction, and include a swept profile formed such that the leading edge and the trailing edge are inclined forward or rearward of the chord line, and the swept profile may include a first area swept rearwards from the hub, a second area swept forwards from a position opposite to the first area to the shroud, and a third area that is not swept and is located between the first area and the second area.

The first area may be from the hub to a position of 30% to 50% of the span in the radial direction.

The second area may be from a position of 70% to 50% of the span in the radial direction to the shroud.

An angle of the rearward sweep and an angle of the forward sweep may be the same.

An angle of the rearward sweep may be formed such that the leading edge and the trailing edge are inclined towards a rear portion of the chord line at 20° to 30°.

An angle of the forward sweep may be formed such that the leading edge and the trailing edge are inclined towards a front portion of the chord line at 20° to 30°.

The airfoil may be formed such that the chord line, which is a line connecting the leading edge and the trailing edge, is arranged outside the pressure surface.

According to an aspect of another exemplary embodiment, there is provided a compressor including: a plurality of compressor rotor disks mounted to a rotating shaft; and a plurality of compressor blades each coupled to the plurality of compressor rotor disks, wherein each compressor blade may include an airfoil including stacked sections having a predetermined thickness formed in a form of a closed curve connecting concave and convex curves, extending in a radial span between a hub and a shroud, extending in a direction of a chord line between a leading edge and a trailing edge, and extending in a thickness direction between a pressure surface and a suction surface. The airfoil may be formed with sections having a predetermined thickness stacked to be inclined in a radial direction, and include a swept profile formed such that the leading edge and the trailing edge are inclined forward or rearward of the chord line, and the swept profile may include a first area swept rearwards from the hub, a second area swept forwards from a position opposite to the first area to the shroud, and a third area that is not swept and is located between the first area and the second area.

The first area may be from the hub to a position of 30% to 50% of the span in the radial direction.

The second area may be from a position of 70% to 50% of the span in the radial direction, to the shroud.

An angle of the rearward sweep and an angle of the forward sweep may be the same.

An angle of the rearward sweep may be formed such that the leading edge and the trailing edge are inclined towards a rear portion of the chord line at 20° to 30°.

An angle of the forward sweep may be formed such that the leading edge and the trailing edge are inclined towards a front portion of the chord line at 20° to 30°.

The airfoil may be formed such that the chord line, which is a line connecting the leading edge and the trailing edge, is arranged outside the pressure surface.

According to an aspect of another exemplary embodiment, there is provided a gas turbine including: a compressor configured to compress air by a plurality of compressor blades; a combustor configured to mix compressed air supplied from the compressor with a fuel for combustion; and a turbine including a plurality of turbine blades mounted in a turbine casing and configured to rotate the turbine blades with combustion gas discharged from the combustor. Each compressor blade may include an airfoil including stacked sections having a predetermined thickness formed in a form of a closed curve connecting concave and convex curves, extending in a radial span between a hub and a shroud, extending in a direction of a chord line between a leading edge and a trailing edge, and extending in a thickness direction between a pressure surface and a suction surface. The airfoil may be formed with sections having a predetermined thickness stacked to be inclined in a radial direction, and include a swept profile formed such that the leading edge and the trailing edge are inclined forward or rearward of the chord line, and the swept profile may include a first area swept rearwards from the hub, a second area swept forwards from a position opposite to the first area to the shroud, and a third area that is not swept and is located between the first area and the second area.

The first area may be located from the hub to a position of 30% to 50% of the span in the radial direction.

The second area may be located from a position of 70% to 50% of the span in the radial direction, to the shroud.

An angle of the rearward sweep may be formed such that the leading edge and the trailing edge are inclined towards a rear portion of the chord line at 20° to 30°.

An angle of the forward sweep may be formed such that the leading edge and the trailing edge are inclined towards a front portion of the chord line at 20° to 30°.

The airfoil may be formed such that the chord line, which is a line connecting the leading edge and the trailing edge, is arranged outside the pressure surface.

Accordingly, the shape of the swept compressor blade with excellent aerodynamic performance can be designed by defining a sweep angle according to the span area of the compressor blade.

### BRIEF DESCRIPTION OF THE DRAWINGS

The above and other aspects will be more clearly understood from the following description of the exemplary embodiments with reference to the accompanying drawings, in which:
FIG. 1 is a partially cut-away perspective view of a gas turbine according to an exemplary embodiment;
FIG. 2 is a cross-sectional view showing a schematic structure of a gas turbine according to an exemplary embodiment;
FIG. 3 is a view showing a section of an airfoil of a compressor blade according to an exemplary embodiment;
FIGS. 4A and 4B are views illustrating a definition of a sweep in an airfoil of the compressor blade;
FIG. 5 is a graph showing a sweep angle for each span area in the airfoil of the compressor blade according to an exemplary embodiment;
FIG. 6 is a view showing a 3-dimensional (3D) image of a sweep angle for each span area in the airfoil of the compressor blade according to an exemplary embodiment;
FIG. 7 is a table showing an experimental example of testing aerodynamic performance while changing the sweep angle for each span area in the airfoil of the compressor blade; and
FIG. 8 is a graph showing an efficiency for each case of FIG. 7.

### DETAILED DESCRIPTION

Various modifications and different embodiments will be described in detail with reference to the accompanying drawings so that those skilled in the art can easily carry out the present disclosure. However, it should be understood that the various embodiments are not for limiting the scope of the disclosure to the specific embodiments, but they should be interpreted to include all modifications, equivalents, and alternatives of the embodiments included within the scope and spirit disclosed herein.

The terminology used herein is for the purpose of describing specific embodiments only and is not intended to limit the scope of the present disclosure. As used herein, singular forms such as "a", "an" and "the" are intended to include plural forms as well, unless the context clearly indicates otherwise. It will be further understood that terms such as "comprise", "include", or "have/has", when used in the present disclosure, should be construed as designating that there are such features, integers, steps, operations, elements, components, and/or combinations thereof, not to exclude the presence or possibility of adding of one or more of other features, integers, steps, operations, elements, components, and/or combinations thereof.

Hereinbelow, exemplary embodiments will be described in detail with reference to the accompanying drawings. Reference now should be made to the drawings, in which like reference numerals refer to like parts throughout various drawings and exemplary embodiments. Further, detailed descriptions related to well-known functions and configurations which may obscure the gist of the present disclosure may be omitted. For the same reason, some components may be exaggerated, omitted, or schematically illustrated in the accompanying drawings.

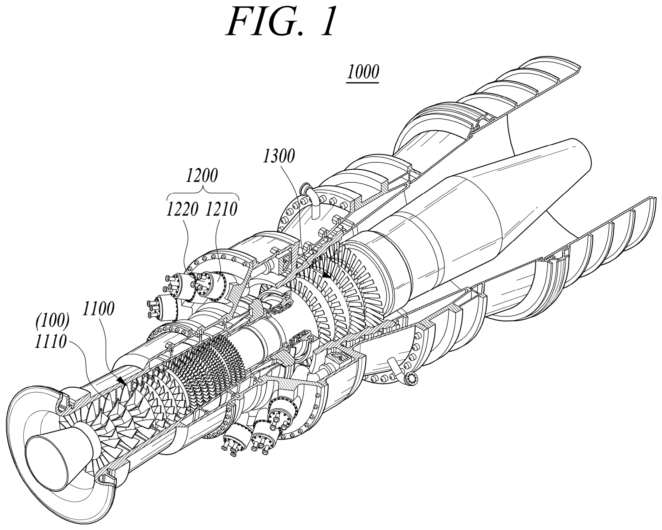

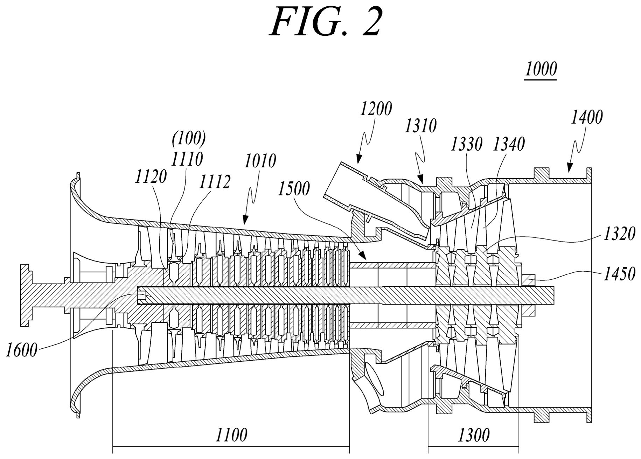

FIG. 1 is a partially cut-away perspective view of a gas turbine according to an exemplary embodiment. FIG. 2 is a cross-sectional view showing a schematic structure of a gas turbine according to an exemplary embodiment.

Referring to FIG. 1, a gas turbine 1000 includes a compressor 1100, a combustor 1200, and a turbine 1300. The compressor 1100 including a plurality of compressor blades 1110 installed radially rotates the plurality of compressor blades 1110, and air is compressed by rotation of the compressor blades 1110 and flows. A size and installing angle of each of the compressor blades 1110 may vary depending on an installation position thereof. The compressor 1100 may be directly or indirectly connected to the turbine 1300 and may receive a portion of power generated by the turbine 1300 and rotate the compressor blades 1110.

The air compressed by the compressor 1100 may flow to the combustor 1200. The combustor 1200 includes a plurality of combustion chambers 1210 and a plurality of fuel nozzle modules 1220 arranged annularly.

Referring to FIG. 2, the gas turbine 1000 includes a housing 1010, and a diffuser 1400 disposed behind the housing 1010 to discharge combustion gas passing through the turbine 1300. The combustor 1200 is arranged in front of the diffuser 1400 to combust the compressed gas supplied thereto.

Based on a flow direction of air, the compressor 1100 is located at an upstream side, and the turbine 1300 is located at a downstream side. A torque tube 1500 serving as a torque transmitting member to transmit a rotational torque generated by the turbine 1300 to the compressor 1100 is disposed between the compressor 1100 and the turbine 1300.

The compressor 1100 includes a plurality of compressor rotor disks1120 (e.g., 14 compressor rotor disks) each of which is fastened by a tie rod 1600 to prevent axial separation in an axial direction of the tie rod 1600.

For example, each of the compressor rotor disks 1120 is axially aligned in a state in which the tie rod 1600 forming a rotary shaft passes approximately through a central portion of each of the compressor rotor disks 1120. Here, adjacent compressor rotor disks 1120 are arranged such that facing surfaces thereof are in tight contact with each other by being pressed by the tie rod 1600. The adjacent compressor rotor disks 1120 cannot rotate because of this arrangement.

Each of the compressor rotor disks 1120 has a plurality of compressor blades 1110 radially coupled to an outer circumferential surface thereof. Each of the compressor blades 1110 includes a dovetail member 1112 fastened to each of the compressor rotor disks 1120.

A plurality of vanes are fixedly arranged in the housing 1010 between each of the compressor rotor disks 1120. While the compressor rotor disks 1120 rotate along with a rotation of the tie rod 1600, the vanes fixed to the housing 1010 do not rotate. The vanes guide the flow of the compressed air moved from front-stage blades 1110 to rear-stage blades 1110.

The dovetail member 1112 may be fastened by a tangential type or an axial type, which may be selected depending on a structure of a gas turbine. The dovetail portion 1112 may have a dovetail shape or a fir-tree shape. In some cases, the blades 1110 may be fastened to the compressor rotor disks 1120 by using other types of fastening device, such as a key or a bolt.

The tie rod 1600 is arranged to pass through central portions of the plurality of compressor rotor disks 1120 and a plurality of turbine rotor disks 1320. The tie rod 1600 may be a single tie rod or a plurality of tie rods. One end of the tie rod 1600 is fastened to a most upstream compressor rotor disk 1120, and the other end thereof is fastened with a fixing nut 1450.

It is understood that the type of the tie rod 1600 may not be limited to the example shown in FIG. 2, and may be changed or vary according to one or more other exemplary embodiments. For example, a single tie rod may be disposed to pass through the central portions of the rotor disks, a plurality of tie rods may be arranged circumferentially, or a combination thereof may be used.

Also, in order to increase the pressure of fluid and then adjust an actual inflow angle of the fluid entering into an entrance of the combustor, a deswirler serving as a guide vane may be installed at the rear stage of the diffuser of the compressor 1100 so that the actual inflow angle matches a designed inflow angle.

The combustor 1200 mixes the introduced compressed air with fuel, burns a fuel-air mixture to generate high temperature and high pressure combustion gas with high energy, and increases the temperature of the combustion gas to a temperature at which the combustor and the turbine components can withstand to heat through an isobaric combustion process.

A plurality of combustors constituting the combustor 1200 may be arranged in the housing in a form of a cell. Each of the combustors may include a burner including a fuel injection nozzle and so on., a combustion liner forming a combustion chamber, and a transition piece serving as a connecting member between the combustor and the turbine.

The combustor liner provides a combustion space in which fuel injected from the fuel injection nozzle is mixed with compressed air supplied from the compressor and burns. The combustor liner may include a flame container providing a combustion space in which fuel mixed with air burns, and a flow sleeve forming an annular space while surrounding the flame container. The fuel nozzle is coupled to a front end of the combustor liner, and an ignition plug is coupled to a side wall of the combustor liner.

The transition piece is connected to a rear end of the combustor liner to transfer combustion gas toward the turbine. An outer wall of the transition piece is cooled by the compressed air supplied from the compressor to prevent the transition piece from being damaged due to the high temperature of the combustion gas.

To this end, the transition piece includes cooling holes through which the compressed air is injected, and compressed air cools an inside of the transition piece and then flows toward the combustor liner.

The e- compressed air that has cooled the transition piece flows into an annular space of the combustor liner, and is supplied as a cooling air through the cooling holes formed in the flow sleeve from the outside of the flow sleeve to an outer wall of the combustor liner.

The combustion gas at high temperature and high pressure ejected from the combustor 1200 is supplied to the turbine 1300. The supplied high temperature and high pressure combustion gas expands and applies impingement or a reaction force to the turbine blades to generate rotational torque. A portion of the acquired rotational torque is transmitted to the compressor through the torque tube, and the remaining portion that is the excessive torque is used to drive a generator and so on.

The turbine 1300 basically has a structure similar to the compressor 1100. That is, the turbine 1300 includes a plurality of turbine rotor disks 1320 similar to the compressor rotor disks of the compressor. The plurality of turbine rotor disks 1320 includes a plurality of turbine blades 1340 arranged radially. The turbine blades 1340 may be coupled to the turbine rotor disks 1320 in a dovetail coupling manner or the like. Further, a plurality of turbine vanes 1330 fixed to a turbine casing 1310 are provided between the turbine blades 1340 of the turbine rotor disks 1320 to guide a flow direction of the combustion gas passing through the turbine blades 1340.

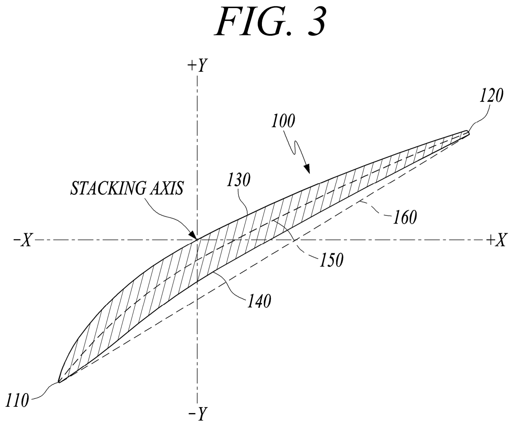

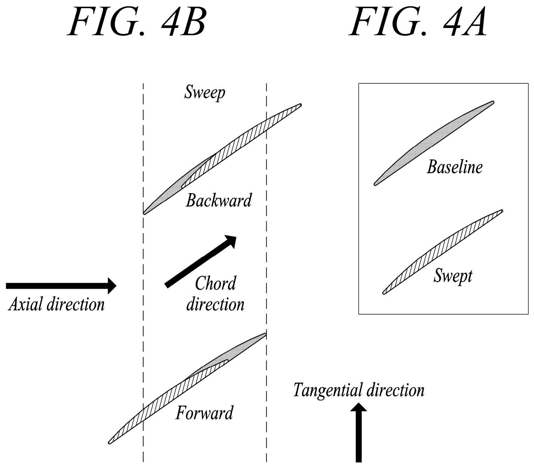

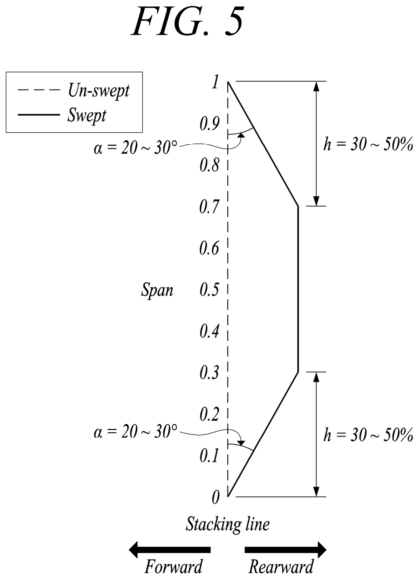

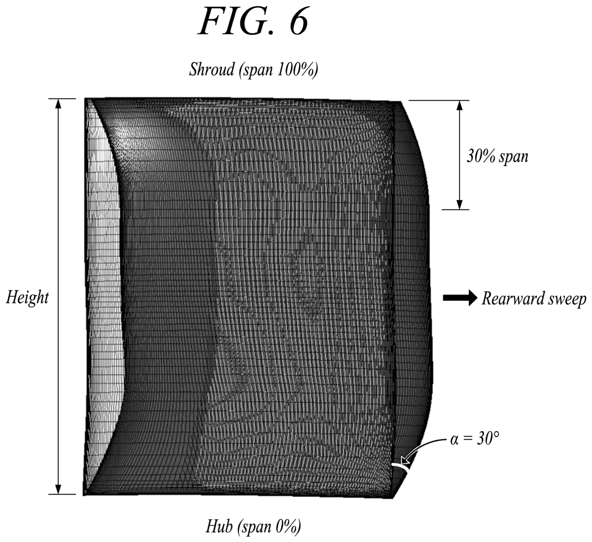

FIG. 3 is a view showing a section of a typical airfoil of a compressor blade according to an exemplary embodiment. FIGS. 4A and 4B are views illustrating a definition of a sweep in an airfoil of the compressor blade. FIG. 5 is a graph showing a sweep angle for each span area in the airfoil of the compressor blade according to an exemplary embodiment. FIG. 6 is a view showing a 3D image of a sweep angle for each span area in the airfoil of the compressor blade according to an exemplary embodiment.

In FIGS. 1 and 2, the gas turbine 1000 may include the compressor 1100, the combustor 1200, and the turbine 1300. In the compressor 1100, a plurality of compressor blades 1100 may be coupled to each compressor rotor disk 1120. The compressor blade may be indicated by "1110" or "100" as reference numerals.

An airfoil of each compressor blade 100 is composed of stacked sections having a predetermined thickness in the form of a closed line connecting concave and convex curves. FIG. 3 shows an example of an airfoil section of the compressor blade 100.

Referring to FIG. 3, a section of the airfoil is formed by a closed curve connecting a leading edge 110, a trailing edge 120, a suction surface 130, and a pressure surface 140. The suction surface 130 is generally formed as a convex curve, and the pressure surface 140 is generally formed as a concave curve.

The airfoil may extend in a radial span between a hub and a shroud, in a chord direction between the leading edge 110 and the trailing edge 120, and in a thickness direction between the pressure surface 140 and the suction surface 130.

As shown in FIG. 2, the compressor blade 100 extends from the hub, that is a radially inner end, toward the shroud, that is a radially outer end. Therefore, the airfoil of the compressor blade 100 may have a radial span between the hub and the shroud, with the span position being 0% at the hub and 100% at the shroud.

As shown in FIG. 3, a camber line 150 passing through a central portion of the airfoil thickness is curved, and a chord line 160 connecting the leading edge 110 and the trailing edge 120 may be arranged to be inclined at a predetermined angle with respect to a shaft of the compressor 1100. One position of the suction surface 130 may be a reference point (i.e., a starting point) of a coordinate system of the stacking shaft.

The airfoil of the compressor blade 100 may be formed such that the chord line 160, which is a linear line connecting the leading edge 110 and the trailing edge 120, is placed outside the pressure surface 140.

Most of the pressure surface 140 of the airfoil may be formed as a concave curved surface, except for the portion adjacent to the leading edge 110 and the trailing edge 120. Therefore, most of the chord line 160 that linearly connects the leading edge 110 and the trailing edge 120 may be placed outside the pressure surface 140.

The airfoil is formed by stacking sections having a predetermined thickness inclined in a radial direction, and has a swept profile in which the leading edge 110 and the trailing edge 120 are formed inclined forward or rearward of the chord line 160.

FIG. 4A shows a baseline cross-section of the airfoil and a swept cross-section stacked on the baseline. FIG. 4B shows a rearward sweep formed such that a cross-section of the airfoil is stacked while moving rearward at a predetermined angle in the direction of the chord line, and a forward sweep formed such that a cross-section of the airfoil is stacked while moving forward at a predetermined angle in the direction of the chord line.

The airfoil of the compressor blade is arranged such that the chord line is inclined at a predetermined angle with respect to an axial direction of the gas turbine, and a cross-section of the airfoil may be arranged parallel to a tangential direction of the gas turbine.

The swept profile of the airfoil may include a first area that sweeps rearward from the hub, a second area that sweeps forward at an opposite position to the first area to the shroud, and a third area that is not swept and is located between the first and second areas.

The span is a length or a height extending radially outward in a range of 0 to 1 (equivalent to 100%), and unit sections of the airfoil may be stacked to sweep rearward or forward for each area of the span.

Referring to FIGS. 5 and 6, the swept profile of the airfoil may include the first area that sweeps rearward from the hub, the second area that sweeps forward at an opposite position to the first area to the shroud, and the third area that is not swept and is located between the first and second areas.

The swept profile of the airfoil may be formed by sweeping rearward at a predetermined angle α within the first area from a span position of 0% at the hub side to a position of 30% to 50% of a radial span. For example, the swept profile of the airfoil may sweep rearward from the hub to a position of 30% of the radial span.

In addition, the swept profile may be stacked without sweeping within the third area, from a position of 30% to 50% of the radial span to a position of 70% to 50% of the radial span. For example, the swept profile of the airfoil may be formed with a sweep angle of 0° from a position of 30% of the span to a position of 70% of the span.

Further, the swept profile of the airfoil may be formed by sweeping forward at a predetermined angle α within the second area from a position of 70% to 50% of the radial span to a position of 100% of the radial span at the shroud. For example, the swept profile of the airfoil may sweep forward from a position of 70% of the span to a position of 100% of the span.

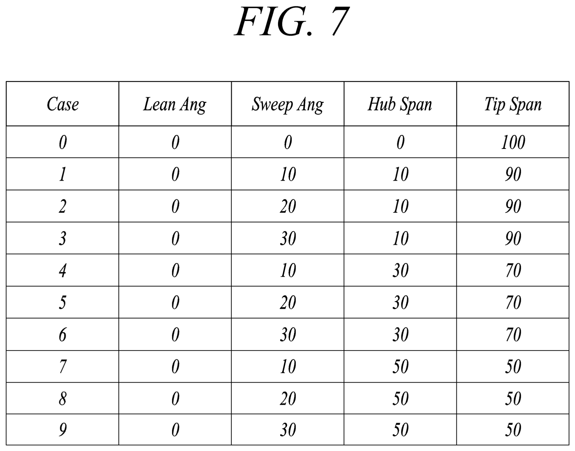

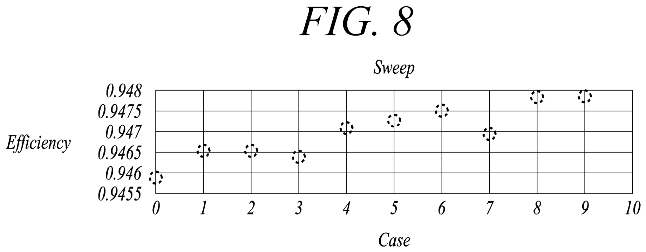

FIG. 7 is a table showing an experimental example of testing aerodynamic performance while varying the sweep angle for each span area in the airfoil of the compressor blade. FIG. 8 is a graph showing an efficiency for each case of FIG. 7.

Referring to FIG. 7, while the first area has the rearward sweep and the second area has the forward sweep from 0 to 100% of the radial span, the aerodynamic performance of the airfoil of the compressor blade was tested with varying the sweep angle.

Case 0 represents a case where the sweep angle is 0° over 0 to 100% of the entire span, indicating an unswept state.

Cases 1, 2, and 3 indicate that 0 to 10% of a span area has the rearward sweep and 90% to 100% of a span area has the forward sweep. Sweep angles of 10°, 20°, and 30° were used, respectively.

Cases 4, 5, and 6 indicate that an area of 0 to 30% of the span has the rearward sweep, and an area of 70% to 100% of the span has the forward sweep. Sweep angles of 10°, 20°, and 30° were used, respectively.

Cases 7, 8, and 9 indicate that an area of 0 to 50% of the span has the rearward sweep, and an area of 50% to 100% of the span has the forward sweep. Sweep angles of 10°, 20°, and 30° were used, respectively.

Referring to FIG. 8, the efficiency of the airfoil of the compressor blade represents the ratio of pressure change of the air flowing into the compressor to change in air temperature. In other words, the efficiency represents the ratio of air pressure change to energy input required to rotate the compressor blade.

First, in case 0, when no sweep is applied at all, the efficiency of the airfoil shows a very low value of less than 0.9460. This may be interpreted as a decrease in compression efficiency of the airfoil due to the characteristics of multistage axial, in which the wall flow loss due to boundary layer growth increases rapidly at the rear end of the compressor.

As shown in FIG. 8, the efficiency of the airfoil has high values equal to or greater than 0.9473 in cases 5, 6, 8, and 9. In general, it can be observed that the efficiency increases as the swept area within the radial span area increases.

Therefore, it is preferable that the airfoil is formed with the rearward sweep from 0 to 30% of the span area or from 0 to 50% of the span area, and the forward sweep from 70% to 100% of the span area or from 50% to 100% of the span area.

In addition, it is preferable that a rearward sweep angle is formed such that the leading edge and the trailing edge are inclined rearward of the chord line at 20° to 30°, and a forward sweep angle is formed such that the leading edge and the trailing edge are inclined forward of the chord line at 20° to 30°.

If the sweep angle is less than 20°, the compression efficiency falls below the target value, and if the sweep angle exceeds 30°, the stacking inclination angle becomes too steep, making it difficult to form the airfoil.

According to the swept compressor blade of the present disclosure, the rearward and forward sweep angles can be appropriately defined for each span area of the compressor blade, so that the shape of the swept compressor blade having excellent compression efficiency can be designed.

While one or more exemplary embodiments have been described with reference to the accompanying drawings, it will be apparent to those skilled in the art that various variations and modifications in form and details may be made by adding, changing, or removing components without departing from the scope and spirit of the present disclosure as defined in the appended claims, and these variations and modifications fall within the spirit and scope of the present disclosure as defined in the appended claims. Accordingly, the description of exemplary embodiments should be construed in a descriptive sense only and not to limit the scope of the claims, and many alternatives, modifications, and variations will be apparent to those skilled in the art.

## Claims

1. A compressor blade comprising:
an airfoil including stacked sections having a predetermined thickness formed in a form of a closed curve, which connects a concave curve and a convex curve, extending in a radial span between a hub and a shroud, extending in a direction of a chord line between a leading edge and a trailing edge, and extending in a thickness direction between a pressure surface and a suction surface,
wherein the airfoil is formed with sections having a predetermined thickness stacked to be inclined in a radial direction, and includes a swept profile formed such that the leading edge and the trailing edge are inclined forward or rearward of the chord line, and
wherein the swept profile includes a first area swept rearwards from the hub, a second area swept forwards from a position opposite to the first area to the shroud, and a third area that is not swept and is located between the first area and the second area.

2. The compressor blade of claim 1, wherein the first area is from the hub to a position of 30% to 50% of the span in the radial direction.

3. The compressor blade of claim 2, wherein the second area is from a position of 70% to 50% of the span in the radial direction to the shroud.

4. The compressor blade of any one of claims 1 to 3, wherein an angle of the rearward sweep and an angle of the forward sweep are the same.

5. The compressor blade of any one of claims 1 to 4, wherein an angle of the rearward sweep is formed such that the leading edge and the trailing edge are inclined towards a rear portion of the chord line at 20° to 30°.

6. The compressor blade of any one of claims 1 to 5, wherein an angle of the forward sweep is formed such that the leading edge and the trailing edge are inclined towards a front portion of the chord line at 20° to 30°.

7. The compressor blade of any one of claims 1 to 6, wherein the airfoil is formed such that the chord line, which is a line connecting the leading edge and the trailing edge, is arranged outside the pressure surface.

8. A compressor comprising:
a plurality of compressor rotor disks mounted to a rotating shaft; and
a plurality of compressor blades each coupled to the plurality of compressor rotor disks,
wherein each compressor blade includes an airfoil including stacked sections having a predetermined thickness formed in a form of a closed curve connecting concave and convex curves, extending in a radial span between a hub and a shroud, extending in a direction of a chord line between a leading edge and a trailing edge, and extending in a thickness direction between a pressure surface and a suction surface,
wherein the airfoil is formed with sections having a predetermined thickness stacked to be inclined in a radial direction, and includes a swept profile formed such that the leading edge and the trailing edge are inclined forward or rearward of the chord line, and
wherein the swept profile includes a first area swept rearwards from the hub, a second area swept forwards from a position opposite to the first area to the shroud, and a third area that is not swept and is located between the first area and the second area.

9. The compressor of claim 8, wherein the first area is from the hub to a position of 30% to 50% of the span in the radial direction.

10. The compressor of claim 9, wherein the second area is from a position of 70% to 50% of the span in the radial direction to the shroud.

11. The compressor of any one of claims 8 to 10, wherein an angle of the rearward sweep and an angle of the forward sweep are the same.

12. The compressor of any one of claims 8 to 11, wherein an angle of the rearward sweep is formed such that the leading edge and the trailing edge are inclined towards a rear portion of the chord line at 20° to 30°.

13. The compressor of any one of claims 8 to 12, wherein an angle of the forward sweep is formed such that the leading edge and the trailing edge are inclined towards a front portion of the chord line at 20° to 30°.

14. The compressor of any one of claims 8 to 13, wherein the airfoil is formed such that the chord line, which is a line connecting the leading edge and the trailing edge, is arranged outside the pressure surface.
